# EUROPEAN PATENT APPLICATION

(11) **EP 4 723 221 A1**
(43) Date of publication of application: **08.04.2026**
(21) Application number: 24905747.2
(22) Date of filing: 30.09.2024
(51) Int. Cl.: H01M 4/505, H01M 4/525, H01M 4/62, H01M 10/0525

(54) **POSITIVE ELECTRODE ACTIVE MATERIAL, AND PREPARATION METHOD THEREFOR AND USE THEREOF**

(30) Priority: 22.12.2023 CN 202311775694
(71) Applicant: Ningbo Ronbay New Energy Technology Co., Ltd., Yuyao Ningbo, Zhejiang 315402 (CN)
(72) Inventor: ZHANG, Yu, Ningbo, Zhejiang 315402 (CN); CHEN, Yu, Ningbo, Zhejiang 315402 (CN); HUANG, Tao, Ningbo, Zhejiang 315402 (CN); SONG, Wei, Ningbo, Zhejiang 315402 (CN); ZHANG, Yuqing, Ningbo, Zhejiang 315402 (CN); WANG, Zhongfeng, Ningbo, Zhejiang 315402 (CN); FENG, Daoyan, Ningbo, Zhejiang 315402 (CN); YAN, Xufeng, Ningbo, Zhejiang 315402 (CN); LIU, Rui, Ningbo, Zhejiang 315402 (CN); LEE, Jonghee, Ningbo, Zhejiang 315402 (CN)
(74) Representative: J A Kemp LLP
(86) International application number: PCT/CN2024/123112
(87) International publication number: WO 2025/130257

(57) **Abstract**

A positive electrode active material, and a preparation method and a use thereof. The chemical formula of the positive electrode active material is Li₁₊ₐNaₓP_{y}Ni_{0.5+b}Mn_{1.5+c}M_{z}O_{d}, where -0.1≤a≤0.2, -0.2≤b≤0.2, -0.2≤c≤0.2, 3.8≤d≤4.3, 0<x≤0.15, 0<y≤0.1, 0≤z≤0.2, and the M element is selected from at least one of Mg, Al, Ca, Sc, Ti, V, Cr, Fe, Co, Cu, Zn, Ga, Sr, Y, Zr, Nb, Mo, Ru, Ta, W, B, Si, Ge, Sb, Te, S, and F. The positive electrode active material has a high average voltage and energy density, and when the positive electrode active material is applied to a lithium-ion battery, it is beneficial for reducing cost and improving comprehensive cost performance.

## Description

This application claims priority to Chinese patent application No. 202311775694.1, filed with the China National Intellectual Property Administration (CNIPA) on December 22, 2023, and entitled with "POSITIVE ELECTRODE ACTIVE MATERIAL AND PREPARATION METHOD AND USE THEREOF", which is hereby incorporated by reference in its entirety.

### TECHNICAL FIELD

The present application relates to the technical field of lithium-ion batteries, and in particular to a positive electrode active material and a preparation method and use thereof.

### BACKGROUND

Positive electrode active material is a key factor for determining the performance of lithium-ion batteries. Current positive electrode active materials include layered materials represented by LiCoO₂ and ternary NCM, olivine-type materials represented by LiFePO₄, and spinel-type materials represented by LiMn₂O₄. Among them, LiCoO₂ and ternary NCM have high energy density, good cycle performance but high price; LiFePO₄ has excellent cycle performance, good safety and low price, but it has relatively low energy density, and the actual capacity of LiFePO₄ is close to the theoretical capacity, making it difficult to make great improvement; LiMn₂O₄ has a stable structure, but it has relatively low capacity and serious problem of Mn dissolution, poor high-temperature performance, and few actual application scenarios.

Lithium nickel manganese oxide (LiNi_{0.5}Mn_{1.5}O₄) is developed on the basis of LiMn₂O₄; the addition of Ni²⁺ raises the valence from Mn³⁺ to Mn⁴⁺, which greatly improves the dissolution phenomenon of Mn. The specific capacities of lithium nickel manganese oxide and LiMn₂O₄ are similar (about 146.7 mAh/g), while the working voltage of lithium nickel manganese oxide (4.75 V) is higher than that of LiMn₂O₄ (4 V) by about 19 % or more and has a higher energy density. Compared with traditional LiCoO₂, NCM and LiFePO₄, lithium nickel manganese oxide mainly increases the energy density by increasing the voltage, rather than adding extra Li to increase energy density like lithium-rich layered materials, thus greatly reducing the watt-hour cost and having extremely high cost performance.

However, high voltage makes the interface issues of lithium nickel manganese oxide particularly prominent; factors such as electrolyte oxidation, interfacial side reactions, and structural changes in the interface layer lead to poor cycle performance, high-temperature performance, and storage performance when lithium nickel manganese oxide is used as a positive electrode active material, as well as severe gas generation. Although phosphorus doping can effectively improve the electrochemical performance of lithium nickel manganese oxide, particularly its long-term cycling stability and high-temperature performance, phosphorus doping will lead to an increase in the disorder of lithium nickel manganese oxide, causing its proportion of the 4 V charging plateau to significantly increase, which directly results in a decrease in the average voltage of lithium nickel manganese oxide, thereby reducing its energy density. To solve this problem, current common method is to perform a holding-annealing process at a low temperature (500 °C to 800 °C) for a long period of time (sometimes up to 30 hours) on phosphorus-doped lithium nickel manganese oxide, which greatly increases the difficulty and cost of preparing lithium nickel manganese oxide. Furthermore, for samples with high phosphorus doping content, even prolonged annealing cannot sufficiently eliminate the 4 V plateau, which severely limits the energy density of lithium nickel manganese oxide.

### SUMMARY

Based on this, it is necessary to provide a positive electrode active material and a preparation method and use thereof for solving the above-mentioned problems. The positive electrode material has a high average voltage and energy density, which is conducive to reducing costs and improving the overall cost performance when used in lithium-ion batteries.

A positive electrode active material has a chemical formula of Li₁₊ₐNaₓP_{y}Ni_{0.5+b}Mn_{1.5+c}M_{z}O_{d}, where -0.1≤a≤0.2, -0.2≤b≤0.2, -0.2≤c≤0.2, 3.8≤d≤4.3, 0<x≤0.15, 0<y≤0.1, 0≤z≤0.2, and the M element is selected from at least one of Mg, Al, Ca, Sc, Ti, V, Cr, Fe, Co, Cu, Zn, Ga, Sr, Y, Zr, Nb, Mo, Ru, Ta, W, B, Si, Ge, Sb, Te, S, and F.

In an embodiment, under the same M element and y and z values, the disorder degree of the positive electrode active material is reduced by at least 15 % compared to that of Li₁₊ₐP_{y}Ni_{0.5+b}Mn_{1.5+c}M_{z}O_{d}.

In an embodiment, the peak width at half height of the main peak of the Ni-O bond of the positive electrode active material is 30 cm⁻¹ to 55 cm⁻¹ in the Raman spectrum.

In an embodiment, the peak width at half height of the main peak of the Mn-O bond of the positive electrode active material is 80 cm⁻¹ to 95 cm⁻¹ in the Raman spectrum.

In an embodiment, under the same M element and y and z values, a change rate of a unit cell parameter of the positive electrode active material is less than or equal to -0.04 % compared to that of Li₁₊ₐP_{y}Ni_{0.5+b}Mn_{1.5+c}M_{z}O_{d}.

In an embodiment, the crystal structure of the positive electrode active material includes a single crystal and/or a polycrystal.

In an embodiment, the particle size of the single crystal is 0.5 µm to 30 µm;
and/or the particle size of the polycrystal is 0.1 µm to 20 µm.

A method for preparing the positive electrode active material as described above, including the following steps:
taking Li₁₊ₐNaₓP_{y}Ni_{0.5+b}Mn_{1.5+c}M_{z}O_{d}, -0.1≤a≤0.2, -0.2≤b≤0.2, -0.2≤c≤0.2, 3.8≤d≤4.3, 0<x≤0.15, 0<y≤0.1, and 0≤z≤0.2 as a reference, mixing and then sintering a nickel manganese hydroxide precursor with a lithium source and a doping source to obtain the positive electrode active material; where the doping source includes a sodium source and a phosphorus source, and the doping source includes a sodium source, a phosphorus source, and a M element-containing compound.

In an embodiment, the preparation method satisfies at least one of the following conditions:
(1) the chemical formula of the nickel manganese hydroxide precursor is Ni_{0.5+b}Mn_{1.5+c}(OH)ₑ, where, -0.2≤b≤0.2, -0.2≤c≤0.2, 3.8≤e≤4.2;
(2) the lithium source is selected from at least one of lithium carbonate, lithium hydroxide, lithium acetate, lithium oxalate, lithium nitrate, lithium citrate, and lithium fluoride;
(3) the sodium source is selected from at least one of sodium element-containing phosphate, sodium carbonate, sodium bicarbonate, sodium hydroxide, sodium oxalate, sodium nitrate, sodium citrate, sodium fluoride, sodium chloride, sodium sulfate, and sodium oxide;
(4) the phosphorus source is selected from at least one of sodium element-containing phosphate, M element-containing phosphate, ammonium phosphate, ammonium dihydrogen phosphate, diammonium hydrogen phosphate, lithium dihydrogen phosphate, dilithium hydrogen phosphate, lithium pyrophosphate, pyrophosphoric acid, orthophosphate, phosphorus pentoxide, and simple substance phosphorus.

In an embodiment, the temperature of the sintering treatment is 900 °C to 1050 °C and the time of the sintering treatment is 1 h to 30 h.

In an embodiment, after the sintering treatment, an annealing treatment is further included; and the temperature of the annealing treatment is 500 °C to 800 °C and the time of the annealing treatment is 1 h to 10 h.

A positive electrode sheet, includes a positive electrode current collector and a positive electrode material layer configured on the surface of the positive electrode current collector, where the positive electrode material layer includes the positive electrode active material as described above.

A lithium-ion battery includes the positive electrode sheet as described above.

In an embodiment, the first-cycle charging capacity below 4.4 V for the lithium-ion battery accounts for less than 6 % of the total first-cycle charging capacity.

An electrical device includes a lithium-ion battery as described above.

The positive electrode active material described in the present application has Na and P co-doping, where part of Na is doped into the transition metal layer, which can effectively suppress the problem of increasing the disorder degree of P-doped lithium nickel manganese oxide. This can not only reduce the proportion of charging plateau below 4 V for lithium nickel manganese oxide, significantly increase the average voltage, greatly reduce the polarization voltage between charge and discharge, make the charge and discharge curve show excellent platform characteristics and reversible characteristics, and increase the energy density, but also effectively improve the rate performance of P-doped lithium nickel manganese oxide.

Compared with the traditional prolonged holding-annealing method, the present application achieves co-doping of Na and P in lithium nickel manganese oxide through a simple single-sintering process. Not only is the preparation method simple and fast, achieving a better reduction in disorder degree than the traditional prolonged holding-annealing method, but it can also significantly shorten the preparation time of lithium nickel manganese oxide, thereby reducing energy consumption and costs.

Therefore, using the positive electrode active material described in this application in lithium-ion batteries is beneficial for reducing the production cost of lithium nickel manganese oxide, increasing its energy density, and thereby improving its overall cost performance.

### BRIEF DESCRIPTION OF DRAWINGS

In order to explain the technical solutions more clearly in the embodiments of the present application or the prior art, the drawings that need to be used in the description of the embodiments or the prior art will be briefly introduced below; and it is obvious that the drawings in the following description are only some embodiments described in the present application, and for those skilled in the art, other drawings can also be obtained from these drawings without creative work.
FIG. 1 is a scanning electron microscope image of a positive electrode active material obtained in Example 1.
FIG. 2 is a scanning electron microscope image of a positive electrode active material obtained in Comparative Example 1.
FIG. 3 is a comparison diagram of the Raman spectra of the positive electrode materials obtained in Example 3 and Comparative Example 1; where A is the Raman spectrum of the positive electrode active material obtained in Example 3, and B is the Raman spectrum of the positive electrode active material obtained in Comparative Example 1.
FIG. 4 is a first cycle charge and discharge curve diagram; where A is the first-cycle charge and discharge curve of Example 1, B is the first-cycle charge and discharge curve of Example 2, C is the first-cycle charge and discharge curve of Example 3, D is the first-cycle charge and discharge curve of Example 4, E is the first-cycle charge and discharge curve of Example 5, and F is the first-cycle charge and discharge curve of Comparative Example 1.

### DESCRIPTION OF EMBODIMENTS

In order to facilitate understanding of the present application, more detailed description of the application will be provided below. However, it should be understood that the present application may be implemented in many different forms and is not limited to the embodiments or examples described herein. On the contrary, these embodiments or examples are provided for more thorough and comprehensive understanding of the disclosure of the present application.

Unless otherwise defined, all technical and scientific terms used herein have the same meaning as commonly understood by those skilled in the art of the technical field of this application. The terminology used herein in the specification of the present application is for the purpose of describing specific embodiments or examples only, and is not intended to limit the present application. Optional ranges of the term "and/or" as used herein include any one of two or more related listed items, as well as any and all combinations of related listed items including any two related listed items, any more related listed items, and a combination of all related listed items.

The present application provides a positive electrode active material with a chemical formula of Li₁₊ₐNaₓP_{y}Ni_{0.5+b}Mn_{1.5+c}M_{z}O_{d}, where -0.1≤a≤0.2, -0.2≤b≤0.2, -0.2≤c≤0.2, 3.8≤d≤4.3, 0<x≤0.15, 0<y≤0.1, 0≤z≤0.2, the M element is selected from at least one of Mg, Al, Ca, Sc, Ti, V, Cr, Fe, Co, Cu, Zn, Ga, Sr, Y, Zr, Nb, Mo, Ru, Ta, W, B, Si, Ge, Sb, Te, S, and F.

The positive electrode active material described in the present application has Na and P co-doping, where part of Na is doped into the transition metal layer, which can effectively suppress the problem of increasing the disorder degree of P-doped lithium nickel manganese oxide. This can not only reduce the proportion of charging plateau below 4 V for lithium nickel manganese oxide, significantly increase the average voltage, greatly reduce the polarization voltage between charge and discharge, make the charge and discharge curve show excellent platform characteristics and reversible characteristics, and increase the energy density, but also effectively improve the rate performance of P-doped lithium nickel manganese oxide.

Preferably, the M element is selected from at least one of Ti, V, Ta, Nb, Mo, Ta, W, and Te.

It should be noted that in the above-mentioned positive electrode active material, P can be in the form of phosphate radical or other ions, which will be not limited in this application.

In an embodiment, under the same M element and y and z values, the disorder degree of the positive electrode active material is reduced by at least 15 % compared to Li₁₊ₐP_{y}Ni_{0.5+b}Mn_{1.5+c}M_{z}O_{d}, which is conducive to further reducing the proportion of the charging plateau below 4 V for lithium nickel manganese oxide, significantly improving the average voltage, greatly reducing the polarization voltage between charging and discharging, and improving the energy density.

It should be noted that this application defines disorder degree by comparing the difference value ratio in the proportion of first-cycle charge capacity below 4.4 V between Li₁₊ₐP_{y}Ni_{0.5+b}Mn_{1.5+c}M_{z}O_{d} and the positive electrode active material. Specifically, under the condition of the same y value, the proportion of the first-cycle charging capacity below 4.4 V in the total first-cycle charging capacity for Li₁₊ₐP_{y}Ni_{0.5+b}Mn_{1.5+c}M_{z}O_{d} is defined as W1; the proportion of the first-cycle charging capacity below 4.4 V in the total first-cycle charging capacity for the positive electrode material is defined as W2; then the disorder degree σ=(W₂-W₁)/W₁, σ≤-15 %. Where, the same y and z values refer to the y and z values of both Li₁₊ₐP_{y}Ni_{0.5+b}Mn_{1.5+c}M_{z}O_{d} and the positive electrode active material being within a 5 % error range. This application does not limit the values of a, b, c, and d in Li₁₊ₐP_{y}Ni_{0.5+b}Mn_{1.5+c}M_{z}O_{d} and the positive electrode active material to be the same; and the difference value ratio of a value between the two fluctuates within 20 %, the difference value ratio of b value between the two fluctuates within 5 %, the difference value ratio of c value between the two fluctuates within 5 %, and the difference value ratio of d value between the two fluctuates within 6 %, all of which are feasible.

In an embodiment, the peak width at half height of the main peak of the Ni-O bond of the positive electrode active material in the Raman spectrum is 30 cm⁻¹ to 55 cm⁻¹.

In an embodiment, the peak width at half height of the main peak of the Mn-O bond of the positive electrode active material in the Raman spectrum is 80 cm⁻¹ to 95 cm⁻¹.

It should be noted that, in the Raman spectrum, the resonance peak of the positive electrode active material near 480 cm⁻¹ is mainly the Ni-O bond main peak, while its resonance peak near 625 cm⁻¹ is mainly the Mn-O bond main peak.

Compared to Li₁₊ₐP_{y}Ni_{0.5+b}Mn_{1.5+c}M_{z}O_{d} with the same y value, the peak widths at half height of the Ni-O bond and Mn-O bond in the positive electrode active material described in the application are independently reduced by 4.5 cm⁻¹ or more, respectively. That is because part of the Na is doped into the transition metal layer in the positive electrode active material, effectively suppressing the increase in disorder degree of P-doped lithium nickel manganese oxide, improving the orderliness of the positive electrode active material, and enabling the positive electrode active material to have good energy density and rate performance.

In the positive electrode material in this application, one part of Na is doped into transition metal sites, making lattice contraction; while another part of Na is doped into lithium sites, making lattice expansion. Under the same M element and y and z values, compared to Li₁₊ₐP_{y}Ni_{0.5+b}Mn_{1.5+c}M_{z}O_{d}, when the unit cell parameter of Li₁₊ₐP_{y}Ni_{0.5+b}Mn_{1.5+c}M_{z}O_{d} is α₁ and the unit cell parameter of the positive electrode active material is α₂, the change rate of the unit cell parameter of the positive electrode active material γ=(α₂-α₁)/α₁. Preferably, the change rate of the unit cell parameter of the positive electrode active material is less than or equal to -0.04 %. Where, the same y and z values refer to the y and z values of both Li₁₊ₐP_{y}Ni_{0.5+b}Mn_{1.5+c}M_{z}O_{d} and the positive electrode active material being within a 5 % error range. This application does not limit the values of a, b, c, and d in Li₁₊ₐP_{y}Ni_{0.5+b}Mn_{1.5+c}M_{z}O_{d} and the positive electrode active material to be the same; the difference value ratio of a value between the two fluctuates within 20 %, the difference value ratio of b value between the two fluctuates within 5 %, the difference value ratio of c value between the two fluctuates within 5 %, and the difference value ratio of the d value between the two fluctuates within 6 %, all of which are feasible.

In an embodiment, the crystal structure of the positive electrode active material includes a single crystal and/or a polycrystal.

The particle diameter of the single crystal is preferably 0.5 µm to 30 µm, preferably 1 µm to 10 µm.

The particle size of the polycrystal is preferably 0.1 µm to 20 µm, preferably 1 µm to 10 µm. It should be noted that the surface of the positive electrode material may also have a coating layer. This application does not limit the type of coating layer, and all types of coating layers involved in the prior art are suitable.

The present application provides a method for preparing a positive electrode active material as described above, including the following steps:
taking Li₁₊ₐNaₓP_{y}Ni_{0.5+b}Mn_{1.5+c}M_{z}O_{d}, -0.1≤a≤0.2, -0.2≤b≤0.2, -0.2≤c≤0.2, 3.8≤d≤4.3, 0<x≤0.15, 0<y≤0.1, and 0≤z≤0.2 as a reference, mixing and then sintering the nickel manganese hydroxide precursor with the lithium source and a doping source to obtain the positive electrode active material; where the doping source includes a sodium source and a phosphorus source, and the doping source includes a sodium source, a phosphorus source, and a compound containing an M element.

Compared with the traditional prolonged holding-annealing method, the present application achieves co-doping of Na and P in lithium nickel manganese oxide through a simple single-sintering process. Not only is the preparation method simple and fast, achieving a better reduction in disorder degree than the traditional prolonged holding-annealing method, but it can also significantly shorten the preparation time of lithium nickel manganese oxide, thereby reducing energy consumption and costs.

In an embodiment, the chemical formula of the nickel manganese hydroxide precursor is Ni_{0.5+b}Mn_{1.5+c}(OH)ₑ, where, -0.2≤b≤0.2, -0.2≤c≤0.2, 3.8≤e≤4.2.

It should be noted that the present application does not limit the preparation method of the nickel manganese hydroxide precursor. Any existing technology, such as coprecipitation method, can be used for preparation. This application will not repeat further on this.

In an embodiment, the lithium source is selected from at least one of lithium carbonate, lithium hydroxide, lithium acetate, lithium oxalate, lithium nitrate, lithium citrate, and lithium fluoride; preferably lithium carbonate or lithium hydroxide.

In an embodiment, the sodium source is selected from at least one of sodium element-containing phosphate, sodium carbonate, sodium bicarbonate, sodium hydroxide, sodium oxalate, sodium nitrate, sodium citrate, sodium fluoride, sodium chloride, sodium sulfate, and sodium oxide; preferably at least one of sodium carbonate, sodium bicarbonate, sodium hydroxide, and sodium oxalate.

In an embodiment, the phosphorus source is selected from at least one of sodium element-containing phosphate, M element-containing phosphate, ammonium phosphate, ammonium dihydrogen phosphate, diammonium hydrogen phosphate, lithium dihydrogen phosphate, dilithium hydrogen phosphate, lithium pyrophosphate, pyrophosphoric acid, orthophosphate, phosphorus pentoxide, and simple substance phosphorus.

Where the sodium element-containing phosphate is selected from at least one of sodium phosphate, sodium monohydrogen phosphate, sodium dihydrogen phosphate, sodium pyrophosphate, trisodium pyrophosphate, trisodium monohydrogen pyrophosphate, and disodium dihydrogen pyrophosphate.

The M element-containing phosphate is selected from at least one of nickel phosphate, cobalt phosphate, manganese phosphate, magnesium phosphate, calcium phosphate, iron phosphate, copper phosphate, zinc phosphate, titanium phosphate, zirconium phosphate, lithium phosphate, cobalt pyrophosphate, nickel pyrophosphate, manganese pyrophosphate, magnesium pyrophosphate, calcium pyrophosphate, iron pyrophosphate, copper pyrophosphate, zinc pyrophosphate, titanium pyrophosphate, and zirconium pyrophosphate. Preferably, the phosphorus source is selected from at least one of ammonium phosphate, ammonium dihydrogen phosphate, diammonium hydrogen phosphate, lithium dihydrogen phosphate, dilithium hydrogen phosphate, lithium pyrophosphate, pyrophosphoric acid, orthophosphate, phosphorus pentoxide, simple substance phosphorus, nickel phosphate, and manganese phosphate.

It should be noted that when the sodium source is selected from sodium element-containing phosphate, since the sodium source contains a phosphorus source, additional other phosphorus source may not be added; when the phosphorus source is selected from sodium element-containing phosphate, since the phosphorus source contains a sodium source, additional other sodium source may not be added; when the phosphorus source is selected from M element-containing phosphate, since the phosphorus source includes M element-containing compound, additional other M element-containing compound may not be added.

In an embodiment, the temperature of the sintering treatment is 900 °C to 1050 °C, preferably 920 °C to 1000 °C; and the time of the sintering treatment is 1 h to 30 h, preferably 5 h to 20 h.

In another embodiment, after the sintering treatment, an annealing treatment is further included; and the temperature of the annealing treatment is 500 °C to 800 °C, preferably 600 °C to 700 °C; the time of the annealing treatment is 1 h to 10 h, preferably 3 h to 6 h. through A short annealing treatment, it is beneficial for further inhibiting the increase of disorder degree of P-doped lithium nickel manganese oxide and improving its orderliness.

The present application provides a positive electrode sheet, includes a positive electrode current collector and a positive electrode material layer configured on the surface of the positive electrode current collector, where the positive electrode material layer includes the positive electrode active material as described above.

In an embodiment, the positive electrode current collector may be a metal foil or a composite current collector. For example, as for the metal foil, aluminium foil can be used. The composite current collector includes a polymer material base layer and a metal layer formed on at least one surface of the polymer material base layer. The composite current collector may be formed by forming a metal material on a polymer material substrate. Optionally, the metal material includes, but is not limited to, one or more of aluminum, aluminum gold, nickel, nickel alloy, titanium, titanium alloy, silver, and silver alloy. Optionally, the polymer material substrate includes, but is not limited to, one or more of polypropylene (PP), polyethylene terephthalate (PET), polybutylene terephthalate (PBT), polystyrene (PS), and polyethylene (PE).

In an embodiment, the positive electrode material layer is mainly composed of the positive electrode active material described in the present application, a binder, and a conductive agent. Optionally, the conductive agent includes, but is not limited to at least one of carbon, carbon nanodots, carbon nanotubes, graphene, and carbon nanofibers; where the carbon includes superconducting carbon, acetylene black, and Ketjen black.

It should be noted that this application does not limit the method of preparing the positive electrode sheet, which can be prepared using conventional processes; for example, the positive electrode sheet can be obtained by dispersing the positive electrode active material, the conductive agent, the binder, and any other components in a solvent to form a positive electrode slurry; coating the positive electrode slurry on the positive electrode current collector; and drying, cold pressing, and so on. Optionally, the solvent includes, but is not limited to, N-methylpyrrolidone.

The present application provides a lithium-ion battery including a positive electrode sheet as described above.

The lithium-ion battery is mainly composed by a positive electrode sheet, a negative electrode sheet, a separator, and an electrolyte; where the negative electrode sheet, separator, and electrolyte may be any commercially available negative electrode sheet (or negative electrode material), separator, and electrolyte. This application does not limit them.

In an embodiment, the smaller the proportion of the first-cycle charging capacity below 4.4 V of the lithium-ion battery relative to the total first-cycle charging capacity, the longer the plateau and the higher the average voltage. Specifically, under the electrochemical window of 3.5 V to 4.95 V and a nominal capacity of 150 mAh/g, the lithium-ion battery is charged at a constant current of 0.1C until 4.95 V, and then charged at a constant voltage until the current density reaches 0.05C. Preferably, the proportion of the first-cycle charging capacity below 4.4 V in the total first-cycle charging capacity is less than 6 % for the lithium-ion battery. Based on this, under the same M element and the values of y and z, the average first-cycle discharge voltage, obtained by discharging at a constant current of 0.1C until 3.5 V after charging within an electrochemical window of 3.5 V to 4.95 V under a nominal capacity of 150 mAh/g for the lithium-ion battery prepared from Li₁₊ₐP_{y}Ni_{0.5+b}Mn_{1.5+c}M_{z}O_{d}, is defined as V₁. The average first-cycle discharge voltage, obtained by discharging at a constant current of 0.1C until 3.5 V after charging within an electrochemical window of 3.5 V to 4.95 V under a nominal capacity of 150 mAh/g for the lithium-ion battery prepared from the positive electrode active material, is defined as V₂. Then, the change rate of the average first-cycle discharge voltage of the lithium-ion battery prepared from the positive electrode active material of this application is as follows: φ=(V₂-V₁)/V₁, where φ≥1 %; that is, the average first-cycle discharge voltage of the lithium-ion battery prepared from the positive electrode active material of this application is increased by at least 1 %.

The present application also provides an electrical device, includes the lithium-ion battery as described above.

It is understood that the above-mentioned electrical device includes any device that uses the above-mentioned lithium-ion battery, such as electric vehicles, electric tools, electronic products, energy storage systems, and office devices, but are not limited to these.

Hereinafter, the positive electrode active material, the preparation method and use thereof will be further described by the following specific examples. However, it will be understood by those skilled in the art that the following examples are merely used for illustration of the present application and should not be construed as limiting the scope of the present application. Where no specific conditions are specified in the examples, conventional conditions or conditions recommended by the manufacturer shall be followed. Where no manufacturer is specified for reagents or instruments used, they are conventional products that are commercially available.

### Example 1

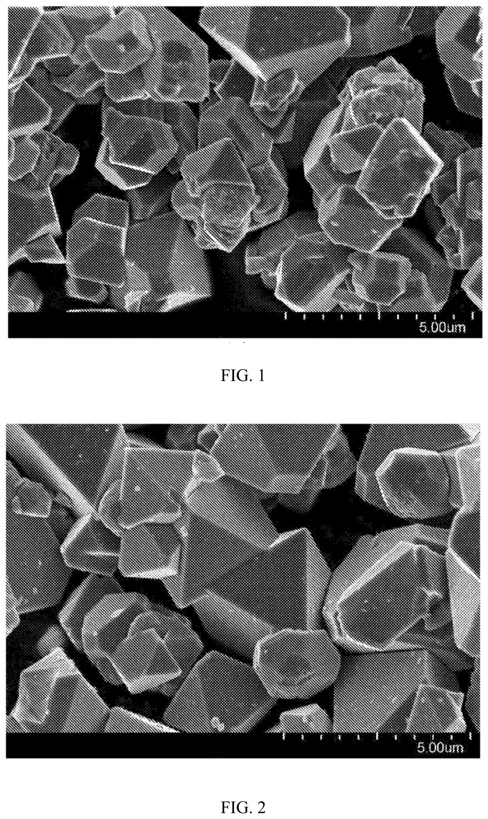

1000g of Ni_{0.5}Mn_{1.5}(OH)₄ precursor, 5g of Ta₂O₅, 224g of lithium carbonate, 6.9g of sodium carbonate, and 39.6g of ammonium dihydrogen phosphate are added to a high-speed mixer, and mixed under stirring to be uniform to obtain a mixture. The mixture is sintered at 950 °C for 15 hours, cooled to 650 °C at 0.5 °C/min, then kept at 650 °C for 4 hours, naturally cooled, crushed and sieved to obtain a positive electrode active material. The scanning electron microscope image of the positive electrode active material prepared in this example is shown in FIG. 1.

### Example 2

The difference of Example 2 from Example 1 lies in that lithium carbonate is 220.8g and sodium carbonate is 11.5g.

### Example 3

The difference of Example 3 from Example 1 lies in that lithium carbonate is 217.6g and sodium carbonate is 16.1g.

### Example 4

The difference of Example 4 from Example 1 lies in that lithium carbonate is 214.3g and sodium carbonate is 20.7g.

### Example 5

The difference of Example 5 from Example 1 lies in that lithium carbonate is 204.7g and sodium carbonate is 34.6g.

### Example 6

1000g of Ni_{0.5}Mn_{1.5}(OH)₄ precursor, 8g of TiO₂, 208.4g of lithium carbonate, 2.3g of sodium carbonate, and 3.86g of ammonium dihydrogen phosphate are added to a high-speed mixer, and mixed under stirring to be uniform to obtain a mixture. The mixture is sintered at 970 °C for 15 hours, cooled to 650 °C at 0.5 °C/min, then kept at 650 °C for 4 hours, naturally cooled, crushed and sieved to obtain the positive electrode active material.

### Example 7

The difference of Example 7 from Example 6 lies in that lithium carbonate is 210.7g, sodium carbonate is 6.9g, and ammonium dihydrogen phosphate is 11.63g.

### Example 8

The difference of Example 8 from Example 6 lies in that lithium carbonate is 210.9g, sodium carbonate is 11.5g, and ammonium dihydrogen phosphate is 19.50g.

### Example 9

The difference of Example 9 from Example 6 lies in that lithium carbonate is 211.2g, sodium carbonate is 16.1g, and ammonium dihydrogen phosphate is 27.47g.

### Example 10

The difference of Example 10 from Example 6 lies in that lithium carbonate is 211.5g, sodium carbonate is 20.7g, and ammonium dihydrogen phosphate is 35.53g.

### Example 11

The difference of Example 11 from Example 6 lies in that lithium carbonate is 211.9g, sodium carbonate is 25.3g, and ammonium dihydrogen phosphate is 43.4g.

### Example 12

The difference of Example 12 from Example 6 lies in that lithium carbonate is 212.2g, sodium carbonate is 29.9g, and ammonium dihydrogen phosphate is 54.7g.

### Example 13

1000g of Ni_{0.5}Mn_{1.5}(OH)₄ precursor, 8g of TiO₂, 210.9g of lithium carbonate, 11.5g of sodium carbonate, and 19.5g of ammonium dihydrogen phosphate are added to a high-speed mixer, and mixed under stirring to be uniform to obtain a mixture. The mixture is sintered at 970 °C for 15 hours, cooled to 650 °C at 0.5 °C/min, then naturally cooled, crushed and sieved to obtain the positive electrode active material.

### Example 14

The difference of Example 14 from Example 13 lies in that lithium carbonate is 211.2g, sodium carbonate is 16.1g, and ammonium dihydrogen phosphate is 27.5g.

### Example 15

1000g of Ni_{0.5}Mn_{1.5}(OH)₄ precursor, 8g of Al₂O₃, 2g of Nb₂O₅, 208.4g of lithium carbonate, and 14.5g of sodium pyrophosphate decahydrate to a high-speed mixer, and mixed under stirring to be uniform to obtain a mixture. The mixture is sintered at 930 °C for 15 hours, cooled to 650 °C at 0.5 °C/min, then kept at 650 °C for 4 hours, naturally cooled, crushed and sieved to obtain the positive electrode active material.

### Example 16

The difference of Example 16 from Example 15 lies in that Nb₂O₅ is 2g, lithium carbonate is 207.7g, and sodium pyrophosphate decahydrate is 24.2g.

### Example 17

The difference of Example 17 from Example 15 lies in that Nb₂O₅ is 2g, lithium carbonate is 207.5g, and sodium pyrophosphate decahydrate is 33.9g.

### Example 18

The difference of Example 18 from Example 15 lies in that Nb₂O₅ is 2g, lithium carbonate is 207.3g, and sodium pyrophosphate decahydrate is 43.6g.

### Example 19

The difference of Example 19 from Example 15 lies in that Nb₂O₅ is 2g, lithium carbonate is 207.3g, and sodium pyrophosphate decahydrate is 72.7g.

### Comparative Example 1

1000g of Ni_{0.5}Mn_{1.5}(OH)₄ precursor, 5g of Ta₂O₅, 228.8g of lithium carbonate, and 39.6g of ammonium dihydrogen phosphate are added to a high-speed mixer, and mixed under stirring to be uniform to obtain a mixture. The mixture is sintered at 950 °C for 15 hours, cooled to 650 °C at 0.5 °C/min, then kept at 650 °C for 4 hours, naturally cooled, crushed and sieved to obtain the positive electrode active material. The scanning electron microscope image of the positive electrode active material prepared in this comparative example is shown in FIG. 2.

### Comparative Example 2

The difference of Comparative Example 2 from Example 6 lies in that no sodium carbonate is added and lithium carbonate is 210.1g.

### Comparative Example 3

The difference of Comparative Example 3 from Example 7 lies in that no sodium carbonate is added and lithium carbonate is 215.5g.

### Comparative Example 4

The difference of Comparative Example 4 from Example 8 lies in that no sodium carbonate is added, and lithium carbonate is 218.9g.

### Comparative Example 5

The difference of Comparative Example 5 from Example 9 lies in that no sodium carbonate is added and lithium carbonate is 222.4g.

### Comparative Example 6

The difference of Comparative Example 6 from Example 10 lies in that no sodium carbonate is added and lithium carbonate is 225.9g.

### Comparative Example 7

The difference of Comparative Example 7 from Example 11 lies in that no sodium carbonate is added, and the amount of lithium carbonate is 231.7g.

### Comparative Example 8

The difference of Comparative Example 8 from Example 12 lies in that no sodium carbonate is added, and the amount of lithium carbonate is 237.5g.

### Comparative Example 9

The difference of Comparative Example 9 from Example 13 lies in that no sodium carbonate is added, and lithium carbonate is 218.9g.

### Comparative Example 10

The difference of Comparative Example 10 from Example 14 lies in that no sodium carbonate is added and lithium carbonate is 222.4g.

### Comparative Example 11

The difference of Comparative Example 11 from Example 15 lies in that 14.5g of sodium pyrophosphate decahydrate is replaced with 7.84g of ammonium dihydrogen phosphate and lithium carbonate is 216.2g.

### Comparative Example 12

The difference of Comparative Example 12 from Example 16 lies in that 24.2g of sodium pyrophosphate decahydrate is replaced with 13.12g of ammonium dihydrogen phosphate and lithium carbonate is 219.2g.

### Comparative Example 13

The difference of Comparative Example 13 from Example 17 lies in that 33.9g of sodium pyrophosphate decahydrate is replaced with 18.45g of ammonium dihydrogen phosphate and lithium carbonate is 222.3g.

### Comparative Example 14

The difference of Comparative Example 14 from Example 18 lies in that 43.6g of sodium pyrophosphate decahydrate is replaced with 23.85g of ammonium dihydrogen phosphate and lithium carbonate is 227.5g.

### Comparative Example 15

The difference of Comparative Example 15 from Example 19 lies in that 72.7g of sodium pyrophosphate decahydrate is replaced with 40.30g of ammonium dihydrogen phosphate and lithium carbonate is 239.0g.

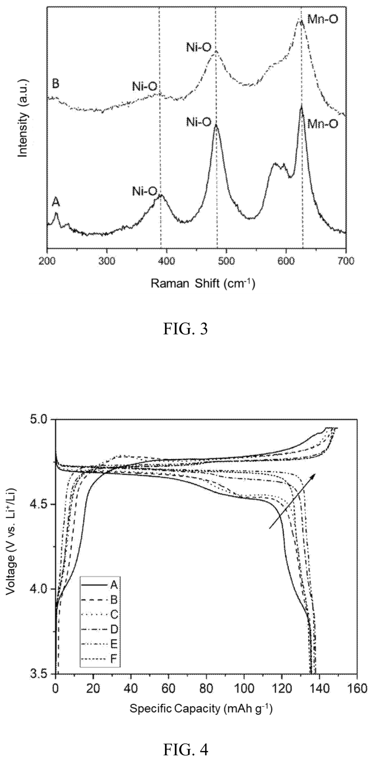

The positive electrode active materials obtained by Examples 1 to 19 and Comparative Examples 1 to 15 are characterized, and the results are shown in FIG. 3 and Tables 1 and 2. It should be noted that there is a reasonable calculation error between the chemical formula measured in Table 1 and the theoretical chemical formula.

**Table 1**

| | Chemical formula | Peak width at half height (cm⁻¹) | | Unit cell parameters | |
|---|---|---|---|---|---|
| | | Ni-O | Mn-O | a=b=c (Å) | Change rate y(%) |
| Example 1 | Li_{1.045}Na_{0.022}P_{0.058}Ni_{0.479}Mn_{1.442} Ta_{0.004}O_{3.905} | 43.17 | 92.14 | 8.1741 | -0.07 |
| Example 2 | Li_{1.03}Na_{0.036}P_{0.058}Ni_{0.475}Mn_{1.434} Ta_{0.004}O_{3.864} | 41.92 | 88.02 | 8.1736 | -0.08 |
| Example 3 | Li_{1.015}Na_{0.05}P_{0.057}Ni_{0.472}Mn_{1.425} Ta_{0.004}O_{3.881} | 38.90 | 86.62 | 8.1726 | -0.09 |
| Example 4 | Li₁Na_{0.064}P_{0.057}Ni_{0.469}Mn_{1.417} Ta_{0.004}O_{3.848} | 34.26 | 90.94 | 8.1703 | -0.12 |
| Example 5 | Li_{0.955}Na_{0.105}P_{0.056}Ni_{0.461}Mn_{1.392} Ta_{0.004}O_{3.81} | 44.68 | 83.73 | 8.1728 | -0.09 |
| Example 6 | Li_{0.992}Na_{0.008}P_{0.006}Ni_{0.493}Mn_{1.488} Ti_{0.006}O_{4.224} | 32.87 | 80.18 | 8.1720 | -0.13 |
| Example 7 | Li_{0.997}Na_{0.023}P_{0.018}Ni_{0.487}Mn_{1.47} Ti_{0.006}O_{4.128} | 37.33 | 85.47 | 8.1714 | -0.11 |
| Example 8 | Li_{0.992}Na_{0.037}P_{0.029}Ni_{0.481}Mn_{1.453} Ti_{0.006}O_{4.036} | 40.10 | 87.84 | 8.1727 | -0.07 |
| Example 9 | Li_{0.987}Na_{0.051}P_{0.04}Ni_{0.476}Mn_{1.436} Ti_{0.006}O_{3.946} | 38.94 | 87.77 | 8.1723 | -0.08 |
| Example 10 | Li_{0.983}Na_{0.065}P_{0.051}Ni_{0.47}Mn_{1.42} Ti_{0.06}O_{3.859} | 41.31 | 88.05 | 8.1733 | -0.06 |
| Example 11 | Li_{0.979}Na_{0.077}P_{0.062}Ni_{0.465}Mn_{1.404} Ti_{0.006}O_{3.777} | 49.59 | 90.33 | 8.1731 | -0.09 |
| Example 12 | Li_{0.972}Na_{0.089}P_{0.076}Ni_{0.459}Mn_{1.386} Ti_{0.005}O_{3.68} | 51.78 | 91.39 | 8.1721 | -0.08 |
| Example 13 | Li_{0.992}Na_{0.037}P_{0.029}Ni_{0.481}Mn_{1.453} Ti_{0.006}O_{4.036} | 41.35 | 87.03 | 8.1734 | -0.06 |
| Example 14 | Li_{0.987}Na_{0.051}P_{0.04}Ni_{0.476}Mn_{1.436} Ti_{0.006}O_{3.946} | 43.10 | 91.71 | 8.1739 | -0.04 |
| Example 15 | Li_{0.981}Na_{0.023}P_{0.012}Ni_{0.48}3Mn_{1.457} Nb_{0.003}Al_{0.027}O_{4.093} | 33.25 | 85.75 | 8.1713 | -0.12 |
| Example 16 | Li_{0.97}6Na_{0.037}P_{0.019}Ni_{0.478}Mn_{1.443} Nb_{0.003}Al_{0.027}O_{4.016} | 35.58 | 86.63 | 8.1727 | -0.09 |
| Example 17 | L_{i0.971}Na_{0.051}P_{0.027}Ni_{0.473}Mn_{1.429} Nb_{0.003}Al_{0.026}O_{3.942} | 40.11 | 87.93 | 8.1722 | -0.09 |
| Example 18 | Li_{0.966}Na_{0.065}P_{0.034}Ni_{0.469}Mn_{1.415} Nb_{0.003}Al_{0.026}O_{3.87} | 39.78 | 87.07 | 8.1735 | -0.07 |
| Example 19 | Li_{0.955}Na_{0.103}P_{0.055}Ni_{0.456}Mn_{1.377} Nb_{0.002}Al_{0.025}O_{3.665} | 47.55 | 89.48 | 8.1732 | -0.07 |

**Table 2**

| | Chemical formula | Peak width at half height (cm⁻¹) | | Unit cell parameters a=b=c(Å) |
|---|---|---|---|---|
| | | Ni-O | Mn-O | |
| Comparative Example 1 | Li_{1.067}P_{0.058}Ni_{0.482}Mn_{1.456}Ta_{0.004}O_{3.855} | 56.77 | 98.69 | 8.1799 |
| Comparative Example 2 | Li₁P_{0.006}Ni_{0.494}Mn_{1.494}Ti_{0.006}O_{4.049} | 40.32 | 90.34 | 8.1826 |
| Comparative Example 3 | Li_{1.02}P_{0.018}Ni_{0.491}Mn_{1.485} Ti_{0.006}O_{4.003} | 42.93 | 91.15 | 8.1803 |
| Comparative Example 4 | Li_{1.03}P_{0.029}Ni_{0.488}Mn_{1.476}Ti_{0.006}O_{3.957} | 48.80 | 96.44 | 8.1787 |
| Comparative Example 5 | Li_{1.04}P_{0.041}Ni_{0.486}Mn_{1.468}Ti_{0.006}O_{3.911} | 52.81 | 93.48 | 8.1790 |
| Comparative Example 6 | Li_{1.05}P_{0.052}Ni_{0.483}Mn_{1.459}Ti_{0.006}O_{3.867} | 56.37 | 97.72 | 8.1786 |
| Comparative Example 7 | Li_{1.071}P_{0.063}Ni_{0.48}Mn_{1.451}Ti_{0.006}O_{3.824} | 61.71 | 102.37 | 8.1803 |
| Comparative Example 8 | Li_{1.088}P_{0.078}N_{10.476}Mn_{1.44}Ti_{0.006}O_{3.765} | 59.93 | 114.86 | 8.1783 |
| Comparative Example 9 | Li_{1.03}P_{0.029}Ni_{0.488}Mn_{1.476}Ti_{0.006}O_{3.957} | 50.46 | 91.63 | 8.1782 |
| Comparative Example 10 | Li_{1.04}P_{0.041}Ni_{0.485}Mn_{1.468} Ti_{0.006}O_{3.911} | 52.14 | 97.53 | 8.1773 |
| Comparative Example 11 | Li_{1.02}P_{0.012}Ni_{0.487}Mn_{1.472}M_{0.003}Al_{0.027}O_{3.969} | 43.53 | 91.52 | 8.1815 |
| Comparative Example 12 | Li_{1.03}P_{0.0 19}Ni_{0.485}Mn_{1.466}Nb_{0.003}Al_{0.027}O_{3.939} | 49.26 | 94.37 | 8.1802 |
| Comparative Example 13 | Li_{1.04}P_{0.027}Ni_{0.483}Mn_{1.46}Nb_{0.003}Al_{0.027}O_{3.909} | 53.17 | 96.52 | 8.1793 |
| Comparative Example 14 | Li_{1.06}P_{0.035}Ni_{0.481}Mn_{1.455}Nb_{0.003}Al_{0.026}O_{3.88} | 56.55 | 97.56 | 8.1796 |
| Comparative Example 15 | Li_{1.1}P_{0.057}Ni_{0.476}Mn_{1.439}Nb_{0.002}Al_{0.026}O_{3.795} | 57.63 | 96.38 | 8.1791 |

FIG. 3 shows the Raman spectra of Example 3 and Comparative Example 1. The peaks near 390 cm⁻¹ and 480 cm⁻¹ are mainly resonance peaks of Ni-O bond in the lithium nickel manganese oxide, and the peak near 625 cm⁻¹ is a resonance peak of Mn-O bond in the lithium nickel manganese oxide. According to FIG. 3, Table 1 and Table 2, the peak widths at half height of the Ni-O bond near 480 cm⁻¹ and the Mn-O bond near 625 cm⁻¹ in the Na-P co-doped sample of Example 3 are both significantly lower than those in the P-doped sample of Comparative Example 1. The Ni-O bond near 390 cm⁻¹ in Example 3 has a typical peak structure, while that in Comparative Example 1 has a broad peak; and Example 3 has a typical characteristic peak near 210 cm⁻¹. All these indicate that the disorder degree of Example 3 is lower than that of Comparative Example 1. It can be seen from Table 1 and Table 2 that the peak width at half height of Na-P co-doped samples is significantly lower than that of corresponding P-doped samples, indicating that Na-P co-doping can significantly reduce the disorder degree of lithium nickel manganese oxide.

According to the knowledge of classical crystallography, since the radius of Na ions is significantly larger than that of Li ions, if Na ions completely replace Li ions, the crystal lattice of the material will expand, resulting in an increase in the unit cell parameters. However, in this patent application, it can be seen from Table 1 and Table 2 that after Na doping, the unit cell parameters of lithium nickel manganese oxide decrease, and the crystal lattice shrinks, which proves that a part of Na ions is doped to Ni and Mn sites, so the chemical formula is expressed as Li₁₊ₐNaₓP_{y}Ni_{0.5+b}Mn_{1.5+c}M_{z}O_{d}.

The positive electrode active materials obtained by Examples 1 to 19 and Comparative Examples 1 to 15 are used to prepare button batteries in sequence; and the specific preparation steps are as follows: preparing an electrode slurry the ratio of positive electrode material: Super P: PVDF = 94.5:3:3.5, inganwith a surface loading amount of 10mg/cm², and drying to obtain the positive electrode sheet. The positive electrode sheet is assembled with the metallic lithium negative electrode to form a CR2430 button battery for testing.

Using a charge and discharge mode of constant current and constant voltage charging + constant current discharging, the button batteries prepared are subjected to performance test at a current density of 0.1C (a nominal capacity of 150mAh/g). The test results are shown in FIG. 4 and Table 3, where W is a proportion of the first-cycle charging capacity below 4.4 V to the total first-cycle charging capacity; σ is a disorder degree; and φ is a change rate of the average first-cycle discharge voltage.

**Table 3**

| | W (%) | σ (%) | Average first-cycle discharge voltage (V) | φ (%) |
|---|---|---|---|---|
| Example 1 | 8 | -27.25 | 4.60 | 1.10 |
| Example 2 | 5.55 | -83.42 | 4.60 | 1.10 |
| Example 3 | 4.5 | -126.22 | 4.65 | 2.20 |
| Example 4 | 3.06 | -232.68 | 4.68 | 2.86 |
| Example 5 | 4.75 | -114.32 | 4.66 | 2.42 |
| Example 6 | 2.84 | -55.56 | 4.66 | 1.97 |
| Example 7 | 3.16 | -52.55 | 4.68 | 2.41 |
| Example 8 | 3.63 | -47.69 | 4.65 | 2.20 |
| Example 9 | 4.27 | -38.29 | 4.65 | 1.75 |
| Example 10 | 4.35 | -45.76 | 4.62 | 1.32 |
| Example 11 | 5.02 | -50.64 | 4.61 | 1.77 |
| Example 12 | 5.97 | -55.65 | 4.60 | 1.77 |
| Example 13 | 5.17 | -46.15 | 4.64 | 2.16 |
| Example 14 | 6.64 | -40.34 | 4.65 | 2.37 |
| Example 15 | 4.97 | -15.33 | 4.65 | 1.75 |
| Example 16 | 4.68 | -24.39 | 4.66 | 2.19 |
| Example 17 | 4.79 | -26.53 | 4.64 | 1.75 |
| Example 18 | 5.67 | -19.35 | 4.64 | 1.98 |
| Example 19 | 4.72 | -43.47 | 4.63 | 1.76 |
| Comparative Example 1 | 10.18 | / | 4.55 | / |
| Comparative Example 2 | 6.39 | / | 4.57 | / |
| Comparative Example 3 | 6.66 | / | 4.57 | / |
| Comparative Example 4 | 6.94 | / | 4.55 | / |
| Comparative Example 5 | 6.92 | / | 4.57 | / |
| Comparative Example 6 | 8.02 | / | 4.56 | / |
| Comparative Example 7 | 10.17 | / | 4.53 | / |
| Comparative Example 8 | 13.46 | / | 4.52 | / |
| Comparative Example 9 | 9.60 | / | 4.54 | / |
| Comparative Example 10 | 11.13 | / | 4.54 | / |
| Comparative Example 11 | 5.87 | / | 4.57 | / |
| Comparative Example 12 | 6.19 | / | 4.56 | / |
| Comparative Example 13 | 6.52 | / | 4.56 | / |
| Comparative Example 14 | 7.03 | / | 4.55 | / |
| Comparative Example 15 | 8.35 | / | 4.55 | / |

FIG. 4 is a charge and discharge curve of Examples 1 to 6; and it can be clearly seen from the figure that at the same P doping amount, as the Na doping amount increases, the discharge curve significantly shifts upward and the voltage increases. According to Table 3, it can be seen that the disorder degree of Na-P co-doped samples is significantly lower than that of corresponding P-doped samples, indicating that Na-P co-doping can significantly improve the order degree of lithium nickel manganese oxide and increase the average discharge voltage. The technical features of the above-mentioned examples can be arbitrarily combined, and not all possible combinations of the technical features of the above-mentioned examples have been described in order to make the description concise. However, as long as there is no contradiction in the combination of the technical features, it should be considered to be within the scope of the present specification.

The above-mentioned examples merely express several examples of the present application, and the description thereof is relatively specific and detailed, but should not be construed as limiting the scope of the patent application. It should be pointed out that for those skilled in the art, several modifications and improvements can be made without departing from the concept of the present application, and these are all within the scope of protection of the present application. Therefore, the scope of protection of this patent application should be subject to the appended claims.

## Claims

1. A positive electrode active material, wherein the positive electrode active material has a chemical formula of Li₁₊ₐNaₓP_{y}Ni_{0.5+b}Mn_{1.5+c}M_{z}O_{d}, and wherein -0.1≤a≤0.2, -0.2≤b≤0.2, -0.2≤c≤0.2, 3.8≤d≤4.3, 0<x≤0.15, 0<y≤0.1, 0≤z≤0.2, the M element is selected from at least one of Mg, Al, Ca, Sc, Ti, V, Cr, Fe, Co, Cu, Zn, Ga, Sr, Y, Zr, Nb, Mo, Ru, Ta, W, B, Si, Ge, Sb, Te, S, and F.

2. The positive electrode active material according to claim 1, wherein under same M element and y and z values, a disorder degree of the positive electrode active material is reduced by at least 15 % compared to that of Li₁₊ₐP_{y}Ni_{0.5+b}Mn_{1.5+c}M_{z}O_{d}.

3. The positive electrode active material according to claim 1, wherein a peak width at half height of a main peak of a Ni-O bond of the positive electrode active material is 30cm⁻¹ to 55cm⁻¹ in Raman spectrum.

4. The positive electrode active material according to claim 1, wherein a peak width at half height of a main peak of a Mn-O bond of the positive electrode active material is 80cm⁻¹ to 95cm⁻¹ in Raman spectrum.

5. The positive electrode active material according to claim 1, wherein under same M element and y and z values, a change rate of a unit cell parameter of the positive electrode active material is less than or equal to -0.04 % compared to that of Li₁₊ₐP_{y}Ni_{0.5+b}Mn_{1.5+c}M_{z}O_{d}.

6. The positive electrode active material according to claim 1, wherein a crystal structure of the positive electrode active material comprises a single crystal and/or a polycrystal.

7. The positive electrode active material according to claim 6, wherein a particle size of the single crystal is 0.5 µm to 30 µm;
and/or, a particle size of the polycrystal is 0.1 µm to 20 µm.

8. A method for preparing the positive electrode active material according to any one of claims 1 to 7, comprising the following steps:
taking Li₁₊ₐNaₓP_{y}Ni_{0.5+b}Mn_{1.5+c}M_{z}O_{d}, -0.1≤a≤0.2, -0.2≤b≤0.2, -0.2≤c≤0.2, 3.8≤d≤4.3, 0<x≤0.15, 0<y≤0.1, 0≤z≤0.2 as a reference, mixing and then sintering a nickel manganese hydroxide precursor with a lithium source and a doping source to obtain the positive electrode active material, wherein the doping source comprises a sodium source and a phosphorus source, and the doping source comprises a sodium source, a phosphorus source, and a M element-containing compound.

9. The method for preparing the positive electrode active material according to claim 8, wherein the method satisfies at least one of the following conditions:
(1) a chemical formula of the nickel manganese hydroxide precursor is Ni_{0.5+b}Mn_{1.5+c}(OH)ₑ, wherein -0.2≤b≤0.2, -0.2≤c≤0.2, 3.8≤e≤4.2;
(2) the lithium source is selected from at least one of lithium carbonate, lithium hydroxide, lithium acetate, lithium oxalate, lithium nitrate, lithium citrate, and lithium fluoride;
(3) the sodium source is selected from at least one of sodium element-containing phosphate, sodium carbonate, sodium bicarbonate, sodium hydroxide, sodium oxalate, sodium nitrate, sodium citrate, sodium fluoride, sodium chloride, sodium sulfate, and sodium oxide;
(4) the phosphorus source is selected from at least one of the sodium element-containing phosphate, M element-containing phosphate, ammonium phosphate, ammonium dihydrogen phosphate, diammonium hydrogen phosphate, lithium dihydrogen phosphate, dilithium hydrogen phosphate, lithium pyrophosphate, pyrophosphoric acid, orthophosphate, phosphorus pentoxide, and simple substance phosphorus.

10. The method for preparing the positive electrode active material according to claim 8, wherein a temperature of the sintering treatment is 900 °C to 1050 °C and a time of the sintering treatment is 1h to 30h.

11. The method for preparing the positive electrode active material according to claim 8, wherein after the sintering treatment, an annealing treatment is further comprised, a temperature of the annealing treatment being 500 °C to 900 °C and a time of the annealing treatment being 1h to 10h.

12. A positive electrode sheet, comprising a positive electrode current collector and a positive electrode material layer configured on a surface of the positive electrode current collector, wherein the positive electrode material layer comprises the positive electrode active material according to any one of claims 1 to 7.

13. A lithium-ion battery, comprising the positive electrode sheet according to claim 12.

14. The lithium-ion battery according to claim 13, wherein a first-cycle charging capacity below 4.4 V for the lithium-ion battery accounts for less than 6 % of a total first-cycle charging capacity.

15. An electrical device, comprising the lithium-ion battery according to claim 13 or 14.
